Europäisches Patentamt

European Patent Office

Office européen des brevets

(11) Veröffentlichungsnummer: **0 177 926**
**B1**

(12) # EUROPÄISCHE PATENTSCHRIFT

(45) Veröffentlichungstag der Patentschrift: **05.09.90**

(51) Int. Cl.⁵: **G 03 B 17/32**

(21) Anmeldenummer: **85112697.9**

(22) Anmeldetag: **07.10.85**

(54) Einzelblattkassette für fotografisches Schichtmaterial.

(30) Priorität: **10.10.84 IT 487884**

(43) Veröffentlichungstag der Anmeldung:
**16.04.86 Patentblatt 86/16**

(45) Bekanntmachung des Hinweises auf die
Patenterteilung:
**05.09.90 Patentblatt 90/36**

(84) Benannte Vertragsstaaten:
**CH DE FR GB LI**

(56) Entgegenhaltungen:
**EP-A-0 075 981**
**US-A-3 784 835**

(73) Patentinhaber: **Durst Phototechnik GmbH**
**Gerbergasse 58**
**I-39100 Bozen (IT)**

(72) Erfinder: **Pramstraller, Wilhelm**
**Köstlanstrasse 55**
**I-39042 Brixen (IT)**
Erfinder: **Stampfer, Hansjörg**
**Angerweg 9**
**I-39042 Brixen (IT)**
Erfinder: **Tasser, Siegfried**
**Angerweg 13**
**I-39042 Brixen (IT)**

Courier Press, Leamington Spa, England.

EP 0 177 926 B1

## Beschreibung

Die Erfindung betrifft eine Kassette zur lichtdichten Aufnahme jeweils eines einzelnen Blattes eines fotografischen Schichtträgers, insbesondere Fotopapier, mit einem lichtdicht verschließbaren Belichtungsfenster für die Belichtung des in der Kassette enthaltenen Blattes und einem ebenfalls lichtdicht verschließbaren Ein-/Ausgabeschlitz für das Blatt.

Kassetten der genannten Art sind vor allem aus dem Anwendungsgebiet der Röngtendiagnostik bekannt, wo sie bei der Erstellung von Röngtenbildern zur Aufnahme von Röngtenfilmblättern dienen. Besondere Probleme ergeben sich im Zusammenhang mit dem Beladen der Kassette mit einem unbelichteten Blatt und der Entnahme des belichteten Blattes aus der Kassette für die anschließende Entwicklung, da die Blätter während des Lade- und Entladevorgangs vor Lichteinfall geschützt bleiben müssen. Bekannte Kassetten sind daher mit relativ komplizierten Öffnungs- und Verschlußvorrichtungen ausgestattet und erfordern darüber hinaus zumeist ebenfalls komplexe komplementäre Handhabungseinrichtungen.

So ist aus der USA-3,784,835 eine Blattfilmkassette bekannt, die in Verbindung mit einem Filmblattspender bei Raumlicht mit einem Einzelblatt bestückbar ist, welches wiederum, ebenfalls bei Raumlicht, an eine Entwicklungseinrichtung abgegeben werden kann. Zu diesem Zwecke weist die Kassette einen Blattaufnahmeraum mit einer durch äußeren Eingriff betätigbaren Öffnungs- und Schließvorrichtung auf. Insbesondere ist im Aufnahmeraum eine Andrückplatte vorgesehen, die in Schließstellung der Kassette federnd gegen deren Rückwand drückt und ein eingeführtes Filmblatt in Belichtungsposition festhält. In Kanälen zu beiden Seiten der Blattaufnahme verlaufen Schubstäbe mit nockenartigen Ansätzen, die bei einer Längsverschiebung der Stäbe auf seitliche Vorsprünge der Andrückplatte eingreifen und die Platte entgegen der Federwirkung von der Rückwand abdrängen. Zusammen mit der Andrückplatte bewegt sich ein Verschluß der Einlauföffnung der Kassette in die Öffnungs- bzw. Schließstellung. Die Schubstäbe in den Kanälen werden über Auslösestifte betätigt, die am Blattspender bzw. der Entwicklungseinrichtung vorgesehen sind und die in die Kanäle eingreifen, wenn die Kassette an den Blattspender bzw. die Entwicklungseinrichtung angesetzt wird. Die gegenseitige Anordnung von Kassette und Blattspender bzw. Entwicklungseinrichtung muß dabei so sein, daß ein Blatt vermöge seiner Schwere in die Kassette hinein- bzw. aus ihr herausfallen kann. Dies führt insbesondere bei größerformatigen Filmblättern zwangsläufig zu einer umständlichen Handhabung der Vorrichtung.

Das Bedürfnis nach einer unter Tageslichtbedingungen verwendbaren Einzelblattkassette, insbesondere für Fotopapier, tritt stärker in den Vordergrund seit Tageslichtvergrößerungsgeräte verbreiteten Einsatz finden, weil erst mit einer solchen Kassette die Vorteile eines Tageslichtsystems voll nutzbar werden.

Der Erfindung liegt die Aufgabe zugrunde, eine Kassette der eingangs genannten Art zu erstellen, welche einfach in der Herstellung ist und bei welcher das Laden mit einem Einzelblatt und die Entnahme desselben aus der Kassette bei Tageslicht auf einfache Weise und ohne die Notwendigkeit aufwendiger, zur Kassette komplementärer Handhabungseinrichtungen erfolgen.

Die Aufgabe wird durch die in Anspruch 1 gekennzeichnete Erfindung gelöst. Weitere Merkmale und Vorteile der Erfindung ergeben sich aus den anderen Ansprüchen in Verbindung mit der Beschreibung eines bevorzugten Ausführungsbeispiels, das im folgenden anhand von Zeichnungen näher erläutert wird.

Diese zeigen:

Figur 1 eine Draufsicht der erfindungsgemäßen Kassette mit offenem Belichtungsfenster;

Figur 2 eine Frontansicht der Kassette;

Figur 3 eine Längsschnittansicht durch die Kassette nach Fig. 1;

Figur 4 ein Detail der Verschlußvorrichtung des Ein-/Ausgabeschlitzes der Kassette.

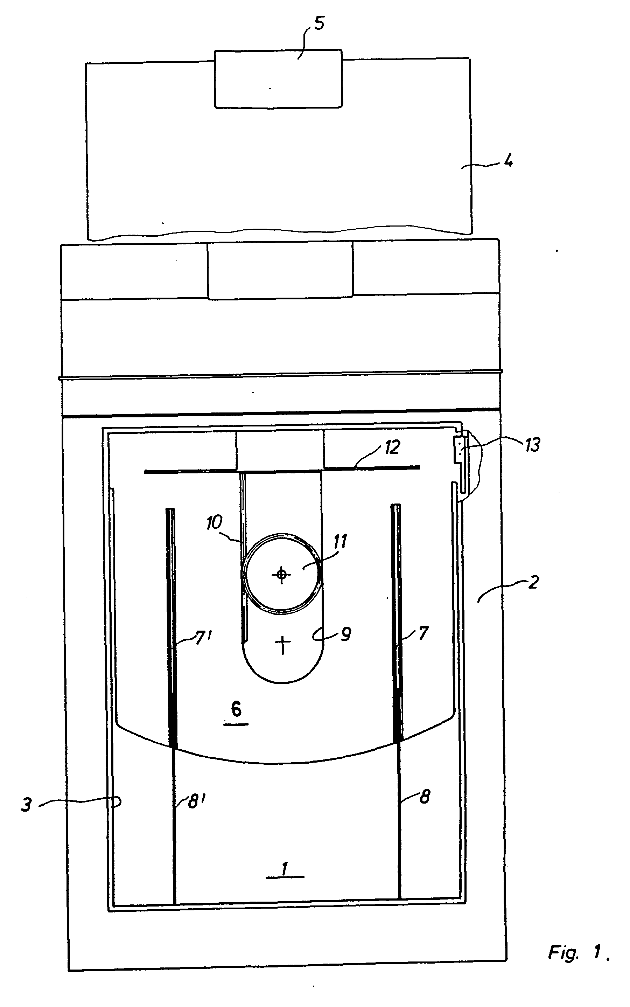

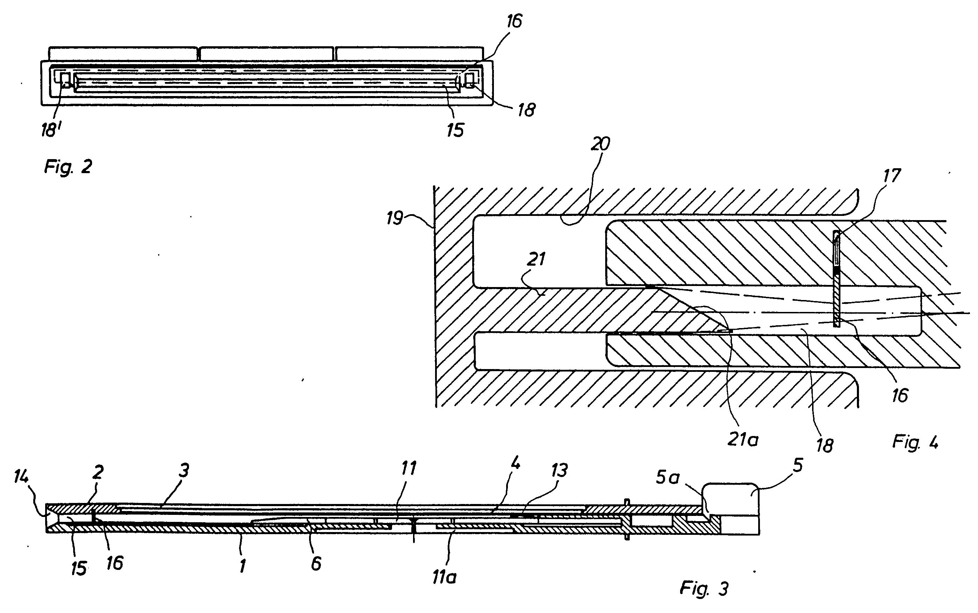

Wie aus den Figuren 1 und 3 hervorgeht, setzt sich die Kassette aus einem rechteckigen Bodenteil 1 und einem Deckelteil 2 zusammen, die formschlüssig miteinander verbunden sind und einen Aufnahmeraum für ein Schichtblatt bilden. Der Deckelteil 2 besitzt ein Belichtungsfenster 3, welches mittels einer verschiebbaren, an einem Ende mit einem Handgriff 5 versehenen Abdeckung 4 lichtdicht verschließbar ist. Die Abdeckung 4 ist von der rückwärtigen Schmalseite der Kassette aus in diese einführbar und ist in Führungen an gegenüberliegenden Seiten des Belichtungsfensters längsverschiebbar geführt. Eine Rastnase 5a am Handgriff hält die Abdeckung in der Schließstellung fest, um ein versehentliches Öffnen zu verhindern.

Längs des Bodenteils 1 ist ein Schieber 6 mittels Führungsmittel 7, 7' und 8, 8' des Schiebers und des Bodenteils in Längsrichtung der Kassette verschiebbar. In seinem mittigen Bereich weist der Schieber eine längliche Aussparung 9 auf, deren eine Längskante 10 als Zahnstange ausgebildet ist, mit welcher ein Zahnrad 11 kämmt, das in der Aussparung 9 aufgenommen ist. Das Zahnrad 11 ist axial mit einer Drehscheibe 11a gekoppelt, die sich auf der Außenseite des Bodenteils 1 befindet und mittels welcher das Zahnrad und der Schieber selbst bewegbar sind. Der Schieber weist am rückwärtigen Ende eine Schulter 12 als Anschlag für ein aufliegendes Schichtblatt auf und seitlich, zu beiden Seiten der Schulter, Blattfedern 13 (in Fig. 1 nur eine davon sichtbar) zum Festhalten des Blattes, so daß es vom Schieber mitgenommen wird.

Auf der Stirnseite weisen Boden- und Deckelteil zu einem Ein-/Ausgabeschlitz 15 zusammenlaufende Ausnehmungen 14 für die Einführung eines Schichtblattes auf. Der Ein-/Ausgabeschlitz 15 ist mittels einer in Richtung normal zur Auflageebene des Blattes in der Kassette bewegbare Verschlußlamelle 16 lichtdicht verschließbar. Wie aus Figur 2 ersichtlich ist, erstreckt sich die Verschlußlamelle 16 längenmäßig über den Schlitz 15 hinaus und endet zu beiden Seiten des Schlitzes in Kanälen 18 und 18', wo sie für einen von außen in die Kanäle einfallenden Betätiger zugänglich ist. Die Betätigungsvorrichtung der Verschlußlamelle ist in Fig. 4 im Detail dargestellt. Die Verschlußlamelle 16 wird von einer Schubfeder 17 in Schließstellung gehalten, so daß die Lamelle in ihrer Ruhestellung den Ein-/Ausgabespalt lichtdicht abschließt. Ein Keilstück 21 mit einer Anlauffläche 21a drängt bei seinem Eingreifen in die Kanäle 18, 18' die Verschlußlamelle entgegen der Wirkung der Feder 17 in die Öffnungsstellung. Wird also die Kassette zum Beladen mit einem Blatt bzw. zur Entnahme eines Blattes mit der Stirnseite in den Aufnahmeschacht 20 eines Adapters 19 eingeführt, der das entsprechende Keilstück 21 aufweist, wird dadurch die Verschlußlamelle selbsttätig geöffnet und sie schließt sich selbsttätig wieder, sobald die Kassette aus dem Schacht genommen wird. Zwischen Stirnteil der Kassette und Aufnahmeschacht des Adapters besteht Formschlüssigkeit, so daß die Kassette in ein lichtdichtes Anlageverhältnis zum Adapter bringbar ist. Der Aufnahmeschacht, der beispielsweise Teil eines Blattspenders oder einer Papierentwicklungsmaschine sein kann, weist seinerseits am Grunde einen mit dem Ein-/Ausgabeschlitz der Kassette fluchtenden Durchführschlitz auf. Vorzugsweise ist der Aufnahmeschacht mit einer inneren Verschlußeinrichtung ausgestattet, welche in der Ruhestellung den Durchführschlitz lichtdicht abschließt und die beim Einschieben einer Kassette von dieser in die Öffnungsstellung gebracht wird.

Das Laden der Kassette mit einem Blatt Fotopapier erfolgt in folgender Weise: Die Kassette wird mit der Stirnseite in den dafür vorgesehenen Aufnahmeschacht, beispielsweise eines Blattspenders, eingelegt, wodurch das Öffnen sowohl des Ein-/Ausgabeschlitzes der Kassette als des Durchführschlitzes des Aufnahmeschachtes bewirkt wird. Durch Betätigen der Drehscheibe 11a wird der Schieber 6 in die dem Ein-/Ausgabeschlitz 15 nahe Extremstellung gebracht und dann mit der blattspenderseitigen Abgabevorrichtung ein Einzelblatt durch die jeweiligen Schlitze hindurchbewegt, bis die Vorderkante von den Blattfedern 13 des Schiebers erfaßt wird und dieser beginnt, sich mit dem Blatt in Einschiebrichtung mitzubewegen. Für den restlichen Teil wird das Blatt sodann durch Drehen der Drehscheibe am Kassettenboden in das Innere der Kassette gezogen. Vorteilhafterweise werden die Blattfedern 13 während der Bewegung des Schiebers vom Dekkelteil 2, an dessen innerer Oberfläche sie gleiten, in Spannung gehalten und weiten sich in der vorderen Extremstellung des Schiebers in Gegenüberstellung mit entsprechenden Ausnehmungen an der Deckeloberfläche aus, um die Vorderkante eines durch den Ein-/Ausgabeschlitz einlaufenden Schichtblattes aufzunehmen. Dadurch wird ein sicheres Erfassen des Blattes und dessen Mitnahme bei der Bewegung des Schiebers gewährleistet. Vorteilhafterweise ist weiters die Drehscheibe, mittels welcher der Schieber bewegt wird, mit einer Gradteilung versehen, welche die laufend eingenommene Lage des Schiebers innerhalb seiner Bahn anzeigt.

In einer besonders einfachen und preisgünstigen Ladevorrichtung ist der mit dem vorgesehenen Aufnahmeschacht ausgestattete Adapter beispielsweise an einen lichtdichten, mit Armlöchern versehenen und das lichtempfindliche Material aufnehmenden Beutel angebracht, aus welchem ein Einzelblatt per Hand an die in den Aufnahmeschacht eingeschobene Kassette ausgegeben wird.

Auf analoge Weise erfolgt die Entnahme eines Blattes aus der Kassette. Hierzu wird diese mit der Stirnseite in den Aufnahmeschacht eines entsprechenden Adapters, der beispielsweise Teil einer Entwicklungsmaschine ist, eingelegt, und das Schichtblatt durch Drehen der Drehscheibe am Kassettenboden zu einem Teil durch den Ein-/Ausgabeschlitz herausbewegt bis es beispielsweise von einem Transportwalzenpaar der Eingabestation der Entwicklungsmaschine übernommen wird.

## Patentansprüche

1. Kassette zur lichtdichten Aufnahme eines Einzelblattes eines fotografischen Schichtträgers, insbesondere Fotopapier, mit einem lichtdicht verschließbaren Belichtungsfenster (3) für die Belichtung des in der Kassette enthaltenen Blattes, einem ebenfalls lichtdicht verschließbaren Ein-/Ausgabeschlitz (15) für das Blatt und einem Verschlußelement (16), das in seiner Ruhestellung den Ein-/Ausgabeschlitz verschließt und durch einen in die Kassette eingreifenden Betätiger (21) in die Öffnungsstellung bringbar ist, dadurch gekennzeichnet, daß ein Schieber (6) im Innern der Kassette in der Aufnahmeebene des Blattes bewegbar ist und Haltemittel (13) für das Blatt zu dessen Mitnahme bei der Bewegung aufweist und der Schieber mit einem Betätigungsorgan außerhalb der Kassette bewegungsverbunden ist.

2. Kassette nach Anspruch 1, dadurch gekennzeichnet, daß der Schieber (6) eine Zahnstange (10) aufweist, die mit einem Zahnrad (11) kämmt, welches um eine feste Drehachse drehbar und mit dem äußeren Betätigungsorgan gekoppelt ist.

3. Kassette nach Anspruch 2, dadurch gekennzeichnet, daß das Zahnrad (11) axial mit einer äußeren Drehscheibe (11a) gekoppelt ist und in einer länglichen Aussparung (9) des Schiebers (6) mit einer als Zahnstange (10) ausgebildeten Längskante der Aussparung kämmt.

4. Kassette nach Anspruch 3, dadurch gekennzeichnet, daß die Drehscheibe (11a) eine Gradteilung aufweist, welche die laufend eingenommene Lage des Schiebers innerhalb · seiner Bahn anzeigt.

5. Kassette nach einem der vorhergehenden Ansprüche, dadurch gekennzeichnet, daß die Haltemittel (13) Federelemente zum Erfassen und Festhalten der Blattkante sind.

6. Kassette nach Anspruch 5, dadurch gekennzeichnet, daß die Federelemente (13) längs der Bewegungsbahn des Schiebers (6) unter Spannung und in einer dem Ein-/Ausgabeschlitz nahen Extremstellung des Schiebers entspannt sind.

7. Kassette nach einem der vorhergehenden Ansprüche, dadurch gekennzeichnet, daß das Verschlußelement (16) für den Ein-/Ausgabeschlitz eine normal zur Blattaufnahmeebene bewegbare Verschlußlamelle aufweist, die sich längsseitig mit den Enden in Kanäle (18, 18') zu beiden Seiten des Ein-/Ausgabeschlitzes erstreckt und über diese von außen betätigbar ist.

8. Kassette nach Anspruch 6, dadurch gekennzeichnet, daß die Verschlußlamelle mittels einer Feder (7) in Richtung Schließstellung für den Ein-/Ausgabeschlitz (15) vorgespannt ist.

**Revendications**

1. Cassette destinée à contenir à l'abri de la lumière une feuille individuelle d'un support de couche sensible photographique, en particulier du papier photographique, présentant une fenêtre d'exposition (3) pouvant être obturée hermétiquement à la lumière et servant à l'exposition d'une feuille contenue dans la cassette, une fente d'entrée/sortie (15) donnant passage à la feuille, et qui peut être elle aussi obturée hermétiquement à la lumière, et un élément obturateur (16) qui, dans sa position de repos, ferme la fente d'entrée/sortie, et peut être amené à la position d'ouverture par un actionneur (21) qui s'engage dans la cassette, caractérisée en ce qu'un coulisseau (6) peut se déplacer à l'intérieur de la cassette, dans le plan de logement de la feuille, et présente des moyens de retenue (13) agissant sur la feuille, pour entraîner cette dernière lors de son déplacement, et le coulisseau est relié cinématiquement à un organe d'actionnement situé à l'extérieur de la cassette.

2. Cassette selon la revendication 1, caractérisée en ce que le coulisseau (6) présente une crémaillère (10) qui engrène avec un pignon (11) qui peut tourner autour d'un axe de rotation fixe et est accouplé à l'organe d'actionnement extérieur.

3. Cassette selon la revendication 2, caractérisée en ce que le pignon (11) est couplé axialement à une molette extérieure (11a) et engrène, dans un évidement longitudinal (9) du coulisseau (6) avec un bord longitudinal de cet évidement, qui forme une crémaillère (10).

4. Cassette selon la revendication 3, caractérisée en ce que la molette (11a) présente une graduation qui indique la position actuelle du coulisseau à l'intérieur de sa glissière.

5. Cassette selon une des revendications précédentes, caractérisée en ce que les moyens de retenue (13) sont des éléments élastiques destinés à saisir et retenir le bord de la feuille.

6. Cassette selon la revendication 5, caractérisée en ce que les éléments élastiques sont sous tension le long du parcours de mouvement du coulisseau (6) et sont détendus dans une position extrême du coulisseau qui est proche de la fente d'entrée/sortie.

7. Cassette selon une des revendications précédentes, caractérisée en ce que l'élément obturateur (16) de la fente d'entrée/sortie présente une lamelle obturatrice qui peut se déplacer perpendiculairement au plan de logement de la feuille, et qui, sur son côté long, se prolonge par ses extrémités, dans des rainures (18, 18') situées de part et d'autres de la fente d'entrée/sortie, et peut être actionnée de l'extérieur à l'aide de ces extrémités.

8. Cassette selon la revendication 6, caractérisée en ce que la lamelle obturatrice est précontrainte à l'aide d'un ressort (7) qui tend à la placer dans la position d'obturation de la fente d'entrée/sortie (15).

**Claims**

1. A cassette for the light-proof storage of an individual sheet of a photographic-layer carrier, in particular photographic paper, with an exposure window (3) for the exposure of the sheet contained in the cassette, which window can be closed in a light-proof manner, an intake/delivery slot (15) for the sheet which can also be closed in a light-proof manner, and a closure element (16) which in its rest position closes the intake/delivery slot and which can be brought into the open position by an actuator (21) engaging in the cassette, characterized in that a slider member (6) is arranged to move in the interior of the cassette in the storage plane of the sheet and has holding means (13) for the sheet for the transport thereof as the slider member moves, and the slider member is movably joined to an actuating element outside the cassette.

2. A cassette according to claim 1, characterized in that the slider member (6) has a toothed rack (10) which meshes with a toothed wheel (11) which is rotatable about a fixed axis of rotation and is coupled with the external actuating element.

3. A cassette according to claim 2, characterized in that the toothed wheel (11) is coupled axially with an external rotary disc (11a) and in an elongate recess (9) of the slider member (6) meshes with a longitudinal edge of the recess constructed as a toothed rack (10).

4. A cassette according to claim 3, characterized in that the rotary disc (11a) is divided into angular divisions which indicate the current position of the slider member along its path.

5. A cassette according to one of the preceding claims, characterized in that the holding means (13) are spring elements for engaging and holding secure the sheet edge.

6. A cassette according to claim 5, characterized in that the spring elements (13) are under tension along the path of movement of the slider member (6) and are released from tension in an extreme position of the slider member close to the intake/delivery slot.

7. A cassette according to one of the preceding claims, characterized in that the closure element (16) for the intake/delivery slot has a closure plate movable at right angles to the storage plane of the sheet, which closure plate extends lengthwise with its ends into channels (18, 18') on each side of the intake/delivery slot and is operable by way of these from the outside.

8. A cassette according to claim 6, characterized in that the closure plate is biassed by means of a spring (7) in the direction of the closed position for the intake/delivery slot (15).

Fig. 1.

Fig. 2

Fig. 4

Fig. 3

EP 0 177 926 B1